Europäisches Patentamt

European Patent Office

Office européen des brevets

(19)

(11) Publication number: **0 068 673**
A1

(12)

# EUROPEAN PATENT APPLICATION

(21) Application number: 82302961.6

(22) Date of filing: 09.06.82

(51) Int. Cl.³: **C 08 J 9/00, C 08 J 9/36**
// C08L61/06

(30) Priority: 13.06.81 GB 8118248

(43) Date of publication of application: 05.01.83
Bulletin 83/1

(84) Designated Contracting States: **BE DE FR GB NL SE**

(71) Applicant: **BP Chemicals Limited, Belgrave
House 76 Buckingham Palace Road, London, SW1W 0SU
(GB)**

(72) Inventor: **Harris, Mark Stanley, BP Chemicals Limited
Hayes Road, Sully Penarth South Glamorgan, CF6 2YU
(GB)**

(74) Representative: **Ryan, Edward Terrence et al, BP
INTERNATIONAL LIMITED Patents and Licensing
Division Chertsey Road, Sunbury-on-Thames Middlesex,
TW16 7LN (GB)**

(54) Phenolic foam of increased resilience and process for making it.

(57) A resilient phenolic foam article is provided prefer-
ably having a maximum recoverable compression of
over 5%, together with a process for making it by crush-
ing. The crushing step is preferably applied to a foam
of defined structure.

1

# PHENOLIC FOAM OF INCREASED RESILIENCE AND PROCESS FOR MAKING IT

The present invention relates to phenolic foams and a process for their production.

It is well-known that foamed products can be made from the products of condensing a phenol with an aldehyde, usually formaldehyde. These foamed products (phenolic foams) are rigid materials. If a force is applied to them they will either resist any change in shape or, if the force is sufficiently great, they will be irreversibly deformed.

Phenolic foams which have some degree of resilience, i.e. the ability to return spontaneously to their original shape when the deforming force has been removed would be desirable. However it has not been possible up to now to make such foams.

It is disclosed in US 3 063 953 that the physical properties of aminoplast foams may be modified by subjecting them to a uniform compressive stress against opposed planar surfaces, followed by periods of relaxation to permit substantially complete recovery of the foamed body. The compression and relaxation treatment is said to give a foam of increased resiliency and compliability. The process of US 3 063 953 is shown applied to a urea-formaldehyde foam. Aminoplast foams such as urea formaldehyde foams differ considerably from phenoplast resins such as phenol-formaldehyde resins.

European patent application EP 17671 discloses the production of elastic foams based on melamine/formaldehyde resins. The use of a compression step to increase elasticity is mentioned.

Phenolic foams however are particularely rigid and the man skilled in the art would see no reason to believe that a crushing step would have any beneficial effect on such very rigid foams.

1

According to one aspect of the present invention there is provided a resilient phenolic foam article. Preferably the resilient foam article has a maximum recoverable compression of over 5%, more preferably the maximum recoverable compression is over 10%, more preferably over 30%.

By maximum recoverable compression throughout this specification is meant the maximum percentage by which a linear dimension can be reduced by the application of compressive force and still return to the original value when the compressive force is removed.

According to another aspect of the present invention the process for increasing the resilience of a phenolic foam article comprises subjecting the foam article to a crushing step by applying a crushing force and recovering the phenolic foam article from the crushing step.

The phenolic foam to which the process of the present invention is applied may be any phenolic foam. Methods of making phenolic foams are well-known. They are usually made by preparing a phenolic resin, incorporating a blowing agent, a catalyst to give a cured product, and optionally a surfactant. The mixture may be treated so as to form an uncured froth which is then caused to cure by heating as disclosed in GB 1 580 565. In this connection it should be noted that the term 'phenolic foam' refers to the cured final product and not to the uncured froth which may be obtained at some intermediate stage in the production of the phenolic foam. In the preferred process for making phenolic foam the curing of the resin and the activation of the blowing agent to give the foam take place in the same step.

The phenolic resin used can be a novolak resin, in which case it is necessary to incorporate a hardener such as a polyamine. Preferably the phenolic resin is a resole which can be cured by the application of heat without the necessity of adding a hardener.

The phenolic resin may be prepared from phenol, or a substituted phenol e.g. alkyl phenols, styrenated phenols, cashew nut shell liquid, and may be modified e.g. by the incorporation of urea. Phenolic resins may be modified by urea by reacting a phenol and formaldehyde and then adding urea. The urea reacts mainly with methylol groups produced by the reaction of the phenol and formaldehyde. Phenolic resins modified in this way have different properties from urea/formaldehyde resins.

The aldehyde component of the phenolic resin is preferably formaldehyde or a substance which yields formaldehyde under the conditions used to form the resin, e.g. a polymer of formaldehyde.

The blowing agent may for example be a low boiling liquid which boils at a temperature below that reached during the curing of the foam. Examples of blowing agents are halohydrocarbons, e.g. fluoro-chlorohydrocarbons and low molecular weight alkanes, e.g. pentane.

The catalysts which may be used to cure the phenolic foam are well-known and may for example be strong mineral acids e.g. sulphuric acid and organic acids e.g. toluene sulphonic acid.

Although as stated above the process may be applied to any phenolic foam to increase the resiliency of the foam we have found that particularly good results are obtained if the phenolic foam to which the process is applied has a specific cell structure. Phenolic foams can be made consisting of a three dimension branched strut structure. The spaces between struts may be closed by continuous phenolic resin membranes giving a closed cell phenolic foam. It is also possible to make phenolic foams in which these membranes contain large gaps or tears or are substantially absent.

The foams which it is preferred to use in the process are phenolic foams comprising 1) a three dimensional network of struts and 2) membranes extending between the struts to define foam cells, the membranes having a plurality of substantially uniformly disposed perforations. Preferably there are at least thirty perforations in each membrane, more preferably at least 100, for example more than 200. The perforations are substantially uniformly disposed on the membranes i.e. on the entire surface of each membrane. There is therefore substantially no individual large breaks or openings in the membrane which would cause the openings as whole to be non-uniformly disposed. Preferably no opening in a membrane has an area greater than 5%, more preferably 2% of the area of the membrane.

It will be realised that the foam may contain a number of defective foam cells i.e. which do not have membranes with a plurality cf substantially uniformly disposed openings. However providing a majority of cells have membranes which satisfy this condition, e.g. at least 70%, preferably at least 85%, then the foam will given phenolic foams of enhanced resilience.

The preferred phenolic foams for use as starting materials in the present invention may for example be made by the carrying out of a conventional foaming process using a phenol/formaldehyde resole and using an alkali metal alkybenzene sulphonate e.g. sodium dodecylbenzene sulphonate, as a surfactant. The quantity of alkali metal alkylbenzene sulphonate may for example be 0.001 to 10%, more preferably 0.001% to 5% based on weight of phenol/aldehyde resin.

It is believed that optimum results in the process of the present invention are obtained by the choice of foams of suitable starting densities.

The foam subjected to the crushing step preferably has a density not greater than 25 kg/m$^3$.

The crushing step used in the process of the present invention consists in subjecting the foam to pressure. The phenolic foam is preferably compressed sufficiently to compress at least part of the foam by not less than 10%, more preferably by 20 to 30%. The compression is measured linearly in the direction in which the force is applied.

It is preferred to apply the crushing force in such a way that a given compression is obtained over a comparatively long period of time. Thus it is preferred to carry out the crushing step so as to reduce the thickness of the foam article, in the direction in which the crushing force is applied, by at least 15% in not less than 15 seconds.

The crushing step may be carried out by any convenient method.

The crushed foam article must be recovered from the crushing step. Thus the pressure applied to the phenolic foam must be sufficient to crush the foam, so as to give increased flexibility, but must not be such as to destroy the integrity of the foam article by breaking it into pieces. The limits of pressure within which the process can be operated can be readily determined by simple tests.

# 0068673

The article to which the crushing step is applied may be a simple rectangular foam block or may be a moulded article of more complex shape. The pressure required to give the required crushing may be provided in any convenient way. Thus the article may be passed between rollers or may be introduced into a press. The pressure may be applied directly to the article by a fluid. Pressure may be applied to only part of the surface of the article where increased flexibility is required only in part of the article. Different parts of the article may be subjected to different pressures.

The foam articles of the present invention may be used for various purposes. Thus the resilience obtained may be used to provide improved push-fit characteristics. Thus an article may be compressed so as to fit into a space and on release of the compression it will expand into engagement with the surrounding material.

The foam articles produced by the process of the present invention may be used in packaging to give packaging materials having good impact absorbtion properties. They have potential application in the construction of seats in environments in which there is a high fire risk.

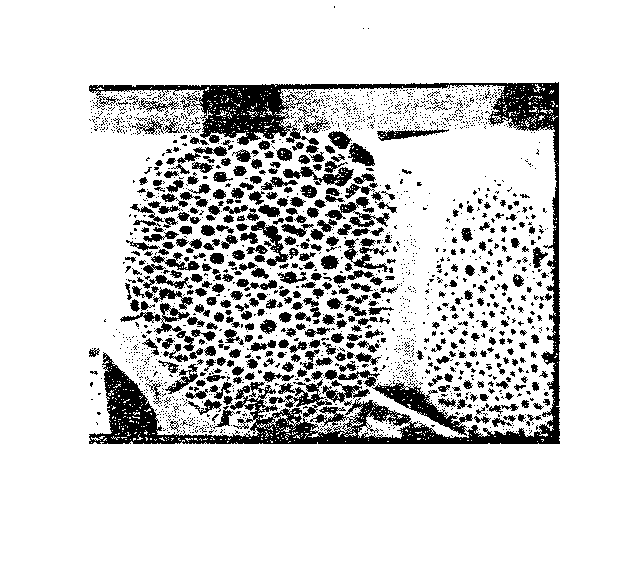

The Figure is a photomicrograph of a sample of phenolic foam which is a preferred starting material for preparing resilient phenolic foams in accordance with the present invention. The invention will now be illustrated by reference to the following examples.

Example 1

A rectangular block of phenolic foam was prepared by conventional techniques from a phenol/formaldehyde resole in the presence of 0.1%, based on weight of resole, of sodium alkylbenzene sulphonate. The resole used was a commercially available one sold under the designation 'Cellobond' J20/1042L ('Cellobond' is a Trade Mark) by BP Chemicals Limited. The resulting block of foam, which had a density of 35 kg/m$^3$ and thickness of 100 mm was placed in a hydraulic press and a steadily increasing hydraulic pressure was applied to the platens of the press. The crushing step was carried out slowly (i.e. over about 10-20 seconds for maximum crushing) until a predetermined degree of compression was reached. The pressure was then released. The foam block was removed as an intact block. The maximum recoverable compression of the foam block was determined in the direction of its thickness by applying a pressure to the opposed faces the foam block sufficient to compress it by varying amounts and measuring the maximum extent to which the foam block could be compressed in the direction of its thickness and still fully recover its original thickness i.e. its thickness after crushing but before testing.

The results are given in Table 1.

### TABLE 1

| | | | |
|---|---|---|---|
| Crushing step compression (%) | 12 | 20 | 28 |
| Maximum recoverable compression (%) | 4 | 5 | 8 |

## Example 2

This was carried out as in Example 1, but using a phenolic foam of density 20 kg/m$^3$. The results are given in Table 2.

### TABLE 2

| | | | | |
|---|---|---|---|---|
| Crushing step compression (%) | 12 | 16 | 20 | 24 |
| Maximum recoverable compression (%) | 8 | 9 | 12 | 15 |

## Example 3

A block of phenolic foam prepared from a phenol-formaldehyde resin of density 20 kg/m$^3$ and thickness 50 mm was compressed at varying rates in a hydraulic press as in Example 1 until the thickness was reduced by 20%.

The results obtained are given in Table 3.

### TABLE 3

| | | | | | |
|---|---|---|---|---|---|
| Time to achieve compression (sec) | 1.5 | 3 | 6 | 12 | 25 |
| Maximum recoverable compression (%) | 32 | 32 | 34 | 36 | 44 |

The foams subjected to the crushing step in the above examples had cells with membranes having a plurality of substantially uniformly disposed perforations as shown in the Figure.

As can be seen from the Figure perforations are present in substantially the whole area of the membrane and the membrane extends over all the area between the surrounding struts without any substantial breaks or major openings in the membrane.

Claims:

1.  A resilient phenolic foam article.

2.  A resilient phenolic foam article according to Claim 1 which has a maximum recoverable compression of over 5%.

3.  A resilient phenolic foam article according to Claim 2 which has a maximum recoverable compression of over 10%.

4.  A resilient phenolic foam which according to Claim 3 which has a maximum recoverable compression of over 30%.

5.  The process for increasing the resilient of a phenolic foam article which comprises subjecting the foam article to a crushing step by applying a crushing force and recovering the phenolic foam article from the crushing step.

6.  The process according to Claim 5 wherein the phenolic foam is derived from a phenol-formaldehyde resin.

7.  A process according to Claim 6 wherein the phenolic foam subjected to the crushing step comprises 1) a three dimensional network of struts and 2) membranes extending between the struts to define foam cells, the membranes having a plurality of substantially uniformly disposed perforations.

8.  A process according to Claim 7 wherein there are at least 30 perforations in each membrane.

9.  A process according to Claim 8 wherein there are at least 100 perforations in each membrane.

10. The process according to either Claim 5 or 6 wherein the density of the foam is not greater than 25 kg/m$^3$.

11. The process according to any one of the preceding claims wherein during the crushing step the foam is compressed by 20 to 30%.

0068673

12. The process according to any one of the preceding claims wherein the crushing step is carried out so as to reduce the thickness of the foam article in the direction in which the crushing force is applied by at least 15% in not less than 15 seconds.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| E | EP-A-0 049 768 (B.A.S.F.) (21-04-1982) *Claims 1,2; page 10, line 33 - page 11, line 15; example 1* | 1-4 | C 08 J 9/00 C 08 J 9/36 // C 08 L 61/06 |
| | --- | | |
| X | GB-A-1 209 113 (DOW CHEMICAL COMPANY) *Page 1, lines 39-84; page 3, lines 3-34; page 3, lines 117-126; page 4, line 85 - page 5, line 35* | 1-4 | |
| | --- | | |
| X | GB-A-1 153 656 (DOW CHEMICAL COMPANY) *Page 1, lines 11-25; example 3* | 1 | |
| | --- | | |
| X | US-A-3 101 242 (J.M.JACKSON Jr.) *Claim 1; column 1, lines 26-29 and lines 47-57; column 2, lines 15-49* | 1,5,6, 10,11 | TECHNICAL FIELDS SEARCHED (Int. Cl. ³) |
| | --- | | C 08 J B 29 D |
| A | GB-A- 867 495 (EXPANDED RUBBER et al.) *Claim 1* | 5 | |
| | --- | | |
| D,A | US-A-3 063 953 (J.J.EBERL et al.) *Column 1, lines 62-64* | 5 | |
| | --- | | |
| A | US-A-3 394 214 (C.J.BENNING) *Claim 1* | 5 | |
| | --- | | |
| | -/- | | |

The present search report has been drawn up for all claims

| Place of search | Date of completion of the search | Examiner |
|---|---|---|
| THE HAGUE | 24-09-1982 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| D,A | EP-A-0 017 671  (B.A.S.F.) <br> *Claims  1,3;  page  12,  lines 13-20* | 5 | |
| | ----- | | |
| | | | **TECHNICAL FIELDS SEARCHED (Int. Cl. ³)** |

The present search report has been drawn up for all claims

| Place of search<br>THE HAGUE | Date of completion of the search<br>24-09-1982 | Examiner<br>HALLEMEESCH A.D. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82